# EUROPÄISCHE PATENTANMELDUNG

(11) **EP 3 173 304 A1**
(43) Veröffentlichungstag der Anmeldung: **31.05.2017**
(21) Anmeldenummer: 16167255.5
(22) Anmeldetag: 27.04.2016
(51) Int. Cl.: B60W 10/28, B60W 10/26, B60W 10/08, B60W 20/12, B60W 20/16, B60W 20/20, B60L 11/12, B60L 15/20, B60L 11/18

(54) **VERFAHREN ZUR ERMITTLUNG EINER FAHRTROUTE**

(30) Priorität: 25.11.2015 EP 15196235
(71) Anmelder: Magna Steyr Fahrzeugtechnik AG & Co KG, 8041 Graz (AT)
(72) Erfinder: GUTRUF, Philipp, 80686 München (DE); GÖLLNER, Julian, 8010 Graz (AT); MARTIN, Michael, 8047 Graz (AT)
(74) Vertreter: Zangger, Bernd

(57) **Zusammenfassung**

Ein Verfahren zur Ermittlung und optional zusätzlich zur Umsetzung einer optimalen Fahrtroute für ein Fahrzeug bzw. durch das Fahrzeug, wobei das Fahrzeug einen elektrischen Antrieb mit einem Energiespeicher umfasst und einen Wandler umfasst, wobei der Wandler mittels eines Kraftstoffs betreibbar ist, wobei über den Wandler der Energiespeicher des elektrischen Antriebs aufladbar ist, umfassend die Schritte,
- Vorgeben einer Zielposition Z durch den Benutzer,
- Ermitteln einer oder mehrerer möglicher Routen von der aktuellen Position A zur Zielposition Z, wobei die Ermittlung in Abhängigkeit von der geographischen Lage sowohl von Tankstellen für den Kraftstoff als auch von Stromtankstellen im Bereich zwischen der aktuellen Position A und der Zielposition Z erfolgt,
- Festlegen der optimalen Route durch Auswahl aus den ermittelten möglichen Routen,
- Optional Umsetzen der optimalen Route durch gezieltes Betreiben des Wandlers zum Aufladen des Energiespeichers beim Abfahren der optimalen Route.

## Beschreibung

### Gebiet der Erfindung

Die vorliegende Erfindung betrifft ein Verfahren zur Ermittlung und optional zusätzlich zur Umsetzung einer optimalen Fahrtroute für ein Fahrzeug bzw. durch das Fahrzeug, wobei das Fahrzeug einen elektrischen Antrieb mit einem Energiespeicher und einen Wandler umfasst, wobei der Wandler mittels eines Kraftstoffs betreibbar ist, wobei über den Wandler der Energiespeicher des elektrischen Antriebs aufladbar ist.

### Stand der Technik

Verfahren zur Ermittlung einer optimalen Fahrtroute werden, wie an sich bekannt, insbesondere gestützt durch ein Navigationssystem, wie beispielsweise in GPS (Global Positioning System) Navigationssystemen eingesetzt um dem Benutzer des Systems, insbesondere einem Fahrer eines Fahrzeuges, zumindest eine geeignete Fahrtroute zu einem vorgegebenen Ziel anzugeben bzw. vorzuschlagen.

Es ist auch bekannt für ein Elektrofahrzeug die Standorte von Ladestationen für den Energiespeicher des Elektrofahrzeuges beim Planen einer Fahrt zu berücksichtigen. Aus der DE 10 2011 108 381 A1 ist beispielsweise ein Verfahren für ein Elektrofahrzeug bekannt, um eine Information zu einem Gesamtgebiet auszugegeben, in welchem Fahrziele mit dem Elektrofahrzeug erreicht werden können. Dazu wird zunächst ein Ausgangsgebiet ermittelt, dessen Grenze mit dem Elektrofahrzeug von einem aktuellen Ort des Elektrofahrzeugs aus und ausgehend von einem aktuellen Ladezustand seines Energiespeichers ohne Nachladen von Energie erreichbar ist. In dem Ausgangsgebiet werden dann Standorte von Ladestationen für das Elektrofahrzeug ermittelt.

Unter einer Umsetzung einer Fahrtroute durch das Fahrzeug, wobei das Fahrzeug einen elektrischen Antrieb und einen Wandler umfasst, wird verstanden, dass der elektrische Antrieb und der Wandler des Fahrzeuges zum Abfahren der betreffenden Fahrtroute betrieben werden, wobei der elektrische Antrieb und der Wandler im Hinblick auf eine geeignete, insbesondere ökonomische, Absolvierung der Fahrtroute ein- und ausgeschaltet und/oder mit höherer und geringerer Leistung betrieben werden können. Ein solches Verfahren zur Umsetzung einer Fahrtroute wird auch als Betriebsstrategie, insbesondere streckenbezogene Betriebsstrategie, oder als Ladestrategie, insbesondere als streckenbezogene Ladestrategie eines Fahrzeuges bezeichnet.

Ein Fahrzeug das einen elektrischen Antrieb mit einem Energiespeicher und einen Wandler umfasst, wobei der Wandler mittels eines Kraftstoffs betreibbar ist, wobei über den Wandler der Energiespeicher des elektrischen Antriebs aufladbar ist, stellt ein sogenanntes "Range-Extender" Fahrzeug da. Der "Wandler" stellt also einen Energiewandler dar, der die in einem Kraftstoff enthaltene nicht-elektrische Energie zumindest teilweise in elektrische Energie umwandeln kann. Der Antrieb eines solchen Fahrzeuges kann beispielsweise primär oder ausschließlich über den elektrischen Antrieb erfolgen. Der Wandler kann jedenfalls dazu genutzt werden den Energiespeicher des elektrischen Antriebs aufzuladen, um so die Reichweite des elektrischen Fahrens zu erhöhen. Das Fahrzeug kann, je nach Typ des Wandlers, eventuell auch direkt über den Wandler bzw. über die durch diesen bereitgestellte Energie angetrieben werden.

Der Wandler kann beispielsweise ein Verbrennungsmotor gekoppelt mit einem Generator oder einer Gasturbine sein. Es ist auch bekannt als Wandler eine mit Wasserstoff oder einem anderen geeigneten Brennstoff betriebene Brennstoffzelle zu verwenden.

Insbesondere für Fahrzeuge mit Brennstoffzellenantrieb ist die Auswahl einer geeigneten Fahrtroute und der Einsatz einer intelligenten Ladestrategie sehr sinnvoll aber auch herausfordernd, da die derzeit vorhandene Lade-Infrastruktur an Wasserstoff-Tankstellen sehr lückenhaft ist und zudem die Leistung und Dynamik von Brennstoffzellen für den direkten Antrieb begrenzt ist. Andererseits können Wasserstoffspeicher deutlich schneller betankt bzw. nachgeladen werden als elektrische Energiespeicher, was auch in Zukunft bei einem besser ausgebauten Tankstellennetz Vorteile bringt. Zudem ist das Betreiben einer Brennstoffzelle, beispielsweise zur Aufladung des elektrischen Energiespeichers, emissionsfrei und insbesondere auch lärmfrei möglich, wodurch Szenarien zum Umladen bzw. Umschichten von Energie ermöglicht werden, die für andere Wandler wenig sinnvoll oder unmöglich wären.

### Zusammenfassung der Erfindung

Es ist eine Aufgabe der Erfindung, ein Verfahren zur Ermittlung und optional zusätzlich zur Umsetzung einer optimalen Fahrtroute für ein Fahrzeug bzw. durch das Fahrzeug anzugeben, wobei das Fahrzeug einen elektrischen Antrieb mit einem Energiespeicher und einen Wandler umfasst, wobei der Wandler mittels eines Kraftstoffs betreibbar ist, wobei über den Wandler der Energiespeicher des elektrischen Antriebs aufladbar ist, so dass den unterschiedlichen Charakteristiken der beiden Energiespeicher Rechnung getragen wird und eine ökonomisch sinnvolle Route vorgeschlagen bzw. absolviert werden kann.

Die Lösung der Aufgabe erfolgt durch ein Verfahren zur Ermittlung und optional zusätzlich zur Umsetzung einer optimalen Fahrtroute für ein Fahrzeug bzw. durch das Fahrzeug, wobei das Fahrzeug einen elektrischen Antrieb mit einem Energiespeicher und einen Wandler umfasst, wobei der Wandler mittels eines Kraftstoffs betreibbar ist, wobei über den Wandler der Energiespeicher des elektrischen Antriebs aufladbar ist, umfassend die Schritte:
- Vorgeben einer Zielposition durch den Benutzer, insbesondere mittels eines HMI (Human Machine Interface),
- Ermitteln einer oder mehrerer möglicher Routen von der aktuellen Position zur Zielposition, wobei die Ermittlung in Abhängigkeit von der geographischen Lage sowohl von Tankstellen für den Kraftstoff als auch von Stromtankstellen im Bereich zwischen der aktuellen Position und der Zielposition erfolgt,
- Festlegen der optimalen Route durch Auswahl aus den ermittelten möglichen Routen, wobei die Auswahl bevorzugt durch den Benutzer oder auch automatisch ohne Eingriff des Benutzers erfolgen kann,
- Optional Umsetzen der optimalen Route durch gezieltes Betreiben, also insbesondere Ein- und Ausschalten, des Wandlers zum Aufladen des Energiespeichers beim Abfahren der optimalen Route.

Erfindungsgemäß ist vorgesehen die Lage sowohl von Stromtankstellen als auch von Tankstellen für den Kraftstoff des Wandlers insbesondere durch Nutzung der entsprechenden Positionskoordinaten mittels eines GPS-Navigationssystems zur Berechnung möglicher Routen zu einem vorgegebenen Ziel zu verwenden. Die insbesondere nach Berücksichtigung von zusätzlichen Daten wie geschätzten Fahrtzeiten, Lade-/Tankmöglichkeiten inklusive notwendiger Mehrzeiten (Lade- bzw. Tankzeiten), aktuellem Treibstoffvorrat, Reichweite des jeweiligen Antriebs bei aktuellen Füllmengen, möglichen Tankvolumen, möglichem Verbrauch auf den jeweiligen Routen, Beschaffenheit der Routen und der Zwischen- und Endpositionen ermittelten möglichen Routen können entweder dem Benutzer angezeigt, vorselektiert und so eingeschränkt dem Benutzer angezeigt oder auch vollautomatisch bewertet werden, um eine Auswahl einer optimalen Route aus den ermittelten möglichen Routen zu treffen.

Unter "Kraftstoff" ist erfindungsgemäß nicht elektrischer Strom gemeint, sondern ein Stoff, in der Regel ein flüssiger oder gasförmiger Stoff. Der Wandler kann insbesondere ein Wasserstoffantrieb sein und der Kraftstoff kann Wasserstoff sein.

Mit einem erfindungsgemäßen Verfahren kann den unterschiedlichen Charakteristiken der beiden Energiespeicher Rechnung getragen werden und eine ökonomisch sinnvolle Route vorgeschlagen bzw. absolviert werden. Abhängig von der Energiequelle kann so auf die Reisezeit und/oder die Reisekosten Einfluss genommen werden. Erfolgt der Antrieb ausschließlich durch den elektrischen Antrieb, können die Reisekosten gegenüber dem reinen Antrieb durch den Wandler, beispielsweise bei hohen Kraftstoffpreisen, reduziert werden, die Reisezeit wird sich jedoch aufgrund der langen elektrischen Ladezeiten erhöhen.

Vorzugsweise erfolgt die Ermittlung abhängig von der nutzbaren Ladeleistung der vorhandenen Ladesysteme (Strom bzw. Kraftstoff) und/oder einem Druckniveau an einer möglichen Tankstelle und/oder einer Ladeleistung an einer möglichen Tankstelle und/oder sonstiger Systemgrenzen der beteiligten Energiespeicher. Jede Stromtankstelle kann nicht jederzeit ausreichend Energie zur Verfügung stellen. Bei der Auswahl der Stromtankstellen-Route ist daher zu berücksichtigen, ob die an der Tankstelle zur Verfügung stehende Ladeleistung für das Fahrzeug auch ausreichend ist oder ob nicht an einer anderen Tankstelle, die eine höhere Ladeleistung aufweist, die Batterie schneller geladen werden könnte. Wenn der Kraftstoff im Fahrzeug in einem Drucktank transportiert wird, ist bei der Wahl der Kraftstoff-Tankstellen-Route der an der Tankstelle für den jeweiligen Kraftstoff zur Verfügung stehende Druck zu berücksichtigen. Ist beispielsweise der Druck an der Tankstelle wesentlich geringer als der Normdruck des im Fahrzeug befindlichen Tankbehälters, wird die Reichweite des Fahrzeugs eingeschränkt. Ist der Tankdruck an der Tankstelle zu hoch, ist eventuell ein Tanken nicht möglich.

Vorzugsweise umfassen die ermittelten möglichen Routen zumindest eine Route, die für das bevorzugte Nutzen von Tankstellen für den Kraftstoff optimiert ist und/oder zumindest eine Route, die für das bevorzugte Nutzen von Stromtankstellen optimiert ist. Insbesondere kann vorzugsweise dem Benutzer des Systems eine Route vorgeschlagen werden die eine Betankung mit dem Kraftstoff des Wandlers, bevorzugt Wasserstoff, priorisiert und eine Route die elektrisches Aufladen priorisiert. Aus diesen beiden vorgeschlagenen Routen kann der Benutzer die seiner Ansicht nach optimale Route auswählen, die sich beispielsweise kosten- bzw. zeitoptimiert auf die Basisroute auswirken kann.

Vorzugsweise werden daher die ermittelten möglichen Routen, insbesondere zwei mögliche Routen, dem Benutzer durch das HMI angezeigt bzw. vorgeschlagen, wobei insbesondere zumindest eine Route, die für das bevorzugte Nutzen von Tankstellen für den Kraftstoff optimiert ist und zumindest eine Route, die für das bevorzugte Nutzen von Stromtankstellen optimiert ist angeboten werden.

Die Auswahl der optimalen Route aus den ermittelten Routen kann durch den Benutzer, also insbesondere den Fahrer oder Beifahrer des Fahrzeuges, erfolgen oder auch automatisch durch das Verfahren oder halbautomatisch, wobei eine Route dem Benutzer besonders empfohlen werden kann.

Falls die optimale Route eine Route ist, die für das bevorzugte Nutzen von Tankstellen für Kraftstoff optimiert ist, also eine Route die Wasserstofftanken priorisiert, kann das Umsetzen der optimalen Route so erfolgen, dass der Wandler möglichst stark genutzt wird, so dass bei Erreichen einer Tankstelle für den Kraftstoff die Füllmenge an Kraftstoff möglichst gering ist, insbesondere der Kraftstofftank gerade annähernd leer ist wenn eine anvisierte Kraftstoff-Tankstelle erreicht wird. Das starke Nutzen des Wandlers kann zum Beispiel ein stärkeres Laden des Energiespeichers während dem Befahren der Route beinhalten, beispielsweise auch ein zusätzliches Nutzen des Wandlers als Antrieb des Fahrzeugs.

Falls die optimale Route eine Route ist, die für das bevorzugte Nutzen von Stromtankstellen optimiert ist, also eine Route die Stromtanken priorisiert, kann das Umsetzen der optimalen Route so erfolgen, dass der elektrische Antrieb möglichst stark genutzt wird, so dass bei Erreichen einer Stromtankstelle der Ladezustand des Energiespeichers möglichst gering ist, wobei "möglichst gering" hier heißen kann, dass ein festgelegter unterer Energieinhalt erreicht wird, da ein völliges Entleeren eines Energiespeichers für diesen nachteilig ist.

Die Ermittlung der möglichen Routen kann in Abhängigkeit vom aktuellen Ladezustand des Energiespeichers (SOC, state of charge) und/oder der aktuellen Füllmenge an Kraftstoff für den Wandler erfolgen und die Erreichbarkeit von Tankstellen für den Kraftstoff und/oder für Strom berücksichtigen.

Die Ermittlung der möglichen Routen kann in Abhängigkeit von Emissionsanforderungen im Verlauf der Route und/oder am Zielort erfolgen. Zum Beispiel kann berücksichtigt werden, dass eine Nutzung des Wandlers in einem Gebäude oder in einer Stadt mit zero-emission Vorschrift möglich ist. Die Ermittlung der möglichen Routen kann auch in Abhängigkeit von wahrscheinlichen nachfolgenden Routen erfolgen, wozu beispielsweise bisher absolvierte Routen berücksichtigt werden können.

Das Umsetzen der optimalen Route kann so erfolgen, dass, insbesondere falls am Zielort der Ladezustand des Energiespeichers gering ist, nach dem Erreichen des Zielorts, insbesondere während dem Parken des Fahrzeuges, der Wandler betrieben wird, um den Energiespeicher aufzuladen.

Ein Fahrzeug kann erfindungsgemäß umfassen: einen elektrischen Antrieb mit einem Energiespeicher, einen Wandler und eine Steuereinheit, wobei der Wandler mittels eines Kraftstoffs betreibbar ist, wobei über den Wandler der Energiespeicher des elektrischen Antriebs aufladbar ist, wobei die Steuereinheit dazu eingerichtet ist, ein Verfahren wie oben beschrieben auszuführen.

### Kurzbeschreibung der Zeichnungen

Die Erfindung wird im Folgenden beispielhaft unter Bezugnahme auf die Zeichnungen beschrieben.
- Fig. 1: ist eine schematische Darstellung einer optimalen Fahrtroute die mittels eines erfindungsgemäßen Verfahrens ermittelt und umgesetzt werden kann.
- Fig. 2: ist eine schematische Darstellung einer alternativen optimalen Fahrtroute die mittels eines erfindungsgemäßen Verfahrens ermittelt und umgesetzt werden kann.
- Fig. 3: ist ein schematisches Ablaufschema eines erfindungsgemäßen Verfahrens zur Ermittlung und zur Umsetzung einer optimalen Fahrtroute für ein Fahrzeug.

### Detaillierte Beschreibung der Erfindung

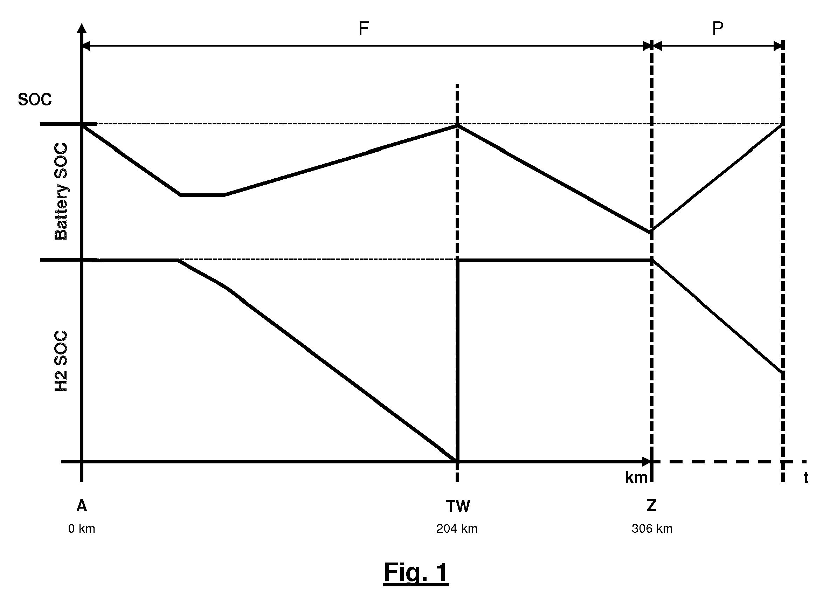

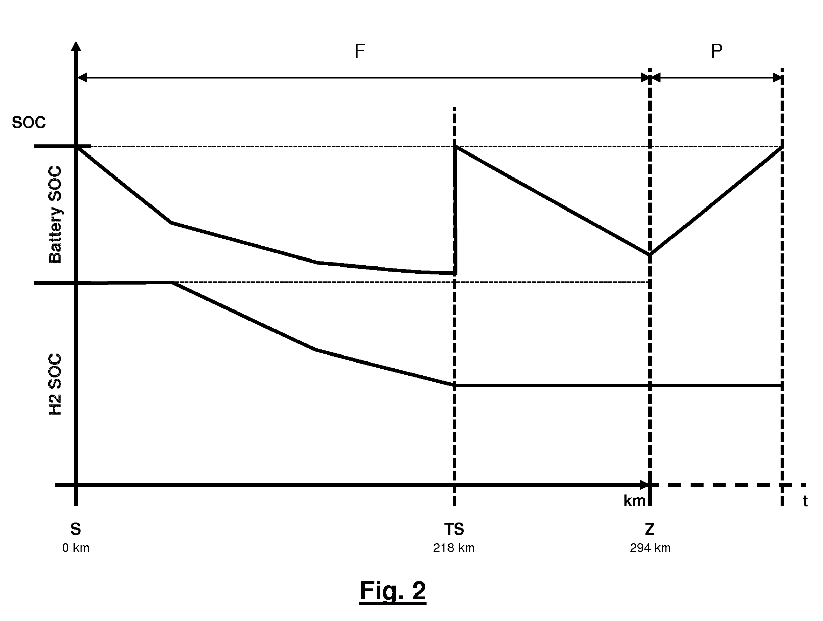

Fig. 1 und Fig. 2 zeigen schematische Darstellungen zweier möglicher optimaler Fahrtrouten die mittels eines erfindungsgemäßen Verfahrens ermittelt und umgesetzt werden können.

Das erfindungsgemäße Verfahren wird dabei anhand einer fiktiven Fahrtstrecke F erläutert. Als Wandler des Fahrzeuges steht eine mit Wasserstoff (H2) betriebene Brennstoffzelle zur Verfügung.

Der Fahrer des Fahrzeuges möchte die Fahrtstrecke F von München Hauptbahnhof als Ausgangsposition und aktuelle Position A nach Karlsruhe Hauptbahnhof als Ziel Z zurücklegen. Da die Reichweite des Fahrzeuges für die gesamte Fahrstrecke F nicht ausreicht, muss Wasserstoff oder elektrische Energie nachgetankt werden. Es gibt dafür im Beispiel zwischen München und Karlsruhe eine Tankstelle TW zum Tanken von Wasserstoff, 204 km nach S, also München gelegen. Wird diese angefahren ergibt sich eine Gesamtstrecke von 306 km bis zum Ziel Z, Karlsruhe Hauptbahnhof. Ferner gibt es eine Stromtankstelle TS in Stuttgart, 218 km nach dem Startpunkt S in München. Bei Anfahren dieser Stromtankstelle TS ergibt sich eine Gesamtstrecke von 294 km bis zur Zielposition.

Als Ergebnis schlägt das erfindungsgemäße Verfahren dem Fahrer zwei ermittelte Routen vor, die die beiden Tankmöglichkeiten, also die zwei unterschiedlichen möglichen Energieformen zum Betreiben des Antriebs, unterschiedlich priorisieren. Die Auswahl der optimalen Route, die letztlich realisiert werden soll, trifft der Fahrer. Die erste ermittelte Route priorisiert Wasserstofftanken und ist in Fig. 1 dargestellt. Die zweite ermittelte Route priorisiert Stromtanken und ist in Fig. 2 dargestellt.

Die in Fig. 1 dargestellte, Wasserstofftanken priorisierende Route wird mittels des erfindungsgemäßen Verfahrens so ermittelt, dass darauf hin optimiert wird, an den wenigen Wasserstoff-Tankstellen die im Bereich zwischen Ausgangspunkt und Ziel vorhanden sind ein maximales Nachtanken von Wasserstoff zu ermöglichen, um eine maximale Reichweite des Fahrzeuges zu erreichen. Dabei dient der Energiespeicher des elektrischen Antriebs als Pufferspeicher, um die Energie des Wasserstoffes zwischenspeichern zu können. Ein möglichst vollständiges Nachladen von Wasserstoff soll ermöglicht werden, wenn sich eine Wasserstoff Tankstelle in Reichweite des Fahrzeuges befindet. Hierzu wird in einem ersten Zeitabschnitt ausschließlich über den elektrischen Antrieb gefahren und die Brennstoffzelle nicht betrieben bzw. bleibt deaktiviert. In einem darauffolgenden zweiten Zeitabschnitt wird zunächst die Brennstoffzelle mit einer geringeren bzw. minimalen Leistung betrieben, die gerade für den Antrieb des Fahrzeuges und eventuelle Zusatzaggregate erforderlich ist, so dass die gespeicherte Energie des elektrischen Antriebs (Battery SOC) auf einem konstanten Niveau bleibt. In einem darauf folgenden dritten Zeitabschnitt wird die Brennstoffzelle mit einer höheren Leistung betrieben als für den Antrieb des Fahrzeuges und eventuelle Zusatzaggregate erforderlich und die restliche aus dem Wasserstoff gewonnene Energie wird zum Aufladen des elektrischen Energiespeichers genutzt. Bei Erreichen der Wasserstofftankstelle TW ist der Wasserstofftank leer, so dass möglichst viel Wasserstoff, nämlich das gesamte Wasserstofftankvolumen (H2 SOC) getankt werden kann. Der Stromspeicher (Battery SOC) ist bei Erreichen der Wasserstofftankstelle TW durch das vorangehende Laden über die Brennstoffzelle vollgefüllt. Die Übergänge zwischen den Zeitabschnitten werden so ermittelt, dass an der geplanten Zwischenstation Wasserstofftankstelle TW der Wasserstofftank (H2 SOC) leer und der elektrische Energiespeicher (Battery SOC) möglichst vollgeladen sind. Nach Verlassen der Wasserstofftankstelle TW wird bis zum Ziel Z ausschließlich mit elektrischer Energie gefahren und die Brennstoffzelle nicht betrieben, da am Zielort keine Wasserstofftankstelle zur Verfügung steht.

Ist das Ziel Z mit geringem elektrischem Ladezustand (Battery SOC) erreicht worden und ist dort kein externes Laden über eine Stromtankstelle möglich, bietet das Fahrzeug die Funktion des emissionsfreien Ladens des elektrischen Speichers durch den Wasserstoffantrieb. Dabei kann das Laden im geparkten Zustand P überall, auch in geschlossenen Räumen, erfolgen. Bei Beginn der nächsten Fahrt soll der Fahrer einen ausreichend hohen Batterieladezustand (Battery SOC) haben.

Bei der in Fig. 2 dargestellten Stromtanken priorisierenden Route, wird von einem erfindungsgemäßen Verfahren die Fahrtstrecke F so gewählt, dass die elektrische Batterie bei einer definierten Stromtankstelle TS als Zwischenstation leer ist bzw. bevorzugt der Ladezustand (Battery SOC) bei einem festgelegten unteren Grenzwert liegt, um ein maximales Nachladen von Strom zu ermöglichen.

Dazu wird in einem ersten Zeitabschnitt elektrisch gefahren ohne die Brennstoffzelle zu betreiben bzw. zu aktivieren. Daraufhin wird in einem zweiten Zeitabschnitt auch der Wasserstoffantrieb genutzt um den elektrischen Energiespeicher des elektrischen Antriebs (Battery SOC) während der Fahrt aufzuladen, damit die Zwischenstation Stromtankstelle TS überhaupt erreicht werden kann. Bei Erreichen der Stromtankstelle TS liegt der elektrische Ladezustand (Battery SOC) bei dem definierten Minimum-Grenzwert, der Wasserstofftank (H2 SOC) ist teilweise geleert und kann vorläufig nicht wieder aufgeladen werden. Strom kann an der Stromtankstelle TS maximal nachgeladen werden. Nach Verlassen der Stromtankstelle TS wird ausschließlich mit elektrischem Antrieb gefahren, die Brennstoffzelle wird nicht betrieben. Bei Erreichen der Zielposition Z kann der elektrische Energiespeicher (Battery SOC) beispielsweise durch eine Strom-Lademöglichkeit am Zielparkplatz Z wieder aufgefüllt werden. Ist eine solche Lademöglichkeit nicht vorhanden kann auch die Brennstoffzelle im Stillstand betrieben werden um den Ladezustand des Energiespeichers anzuheben.

Wählt der Fahrer die Strecke des Wasserstoff-Nachtankens (Fig. 1) erhöht sich die Fahrtstrecke um 12 km. Das Nachtanken des Wasserstoffes erfolgt jedoch in wenigen Minuten. Ist die Strecke des elektrischen Ladens (Fig. 2) gewählt, reduziert sich die Gesamtstrecke auf 294 km. Die Fahrtzeit erhöht sich jedoch um die Ladezeit, die abhängig von der Ladeart und Ladeleistung der Batterie mehrere Stunden dauern kann. Der Benutzer des erfindungsgemäßen Verfahrens kann daher zwischen diesen beiden Priorisierungen wählen und gegebenenfalls eine längere Fahrtstrecke zur Erreichung einer geringeren Fahrtzeit wählen.

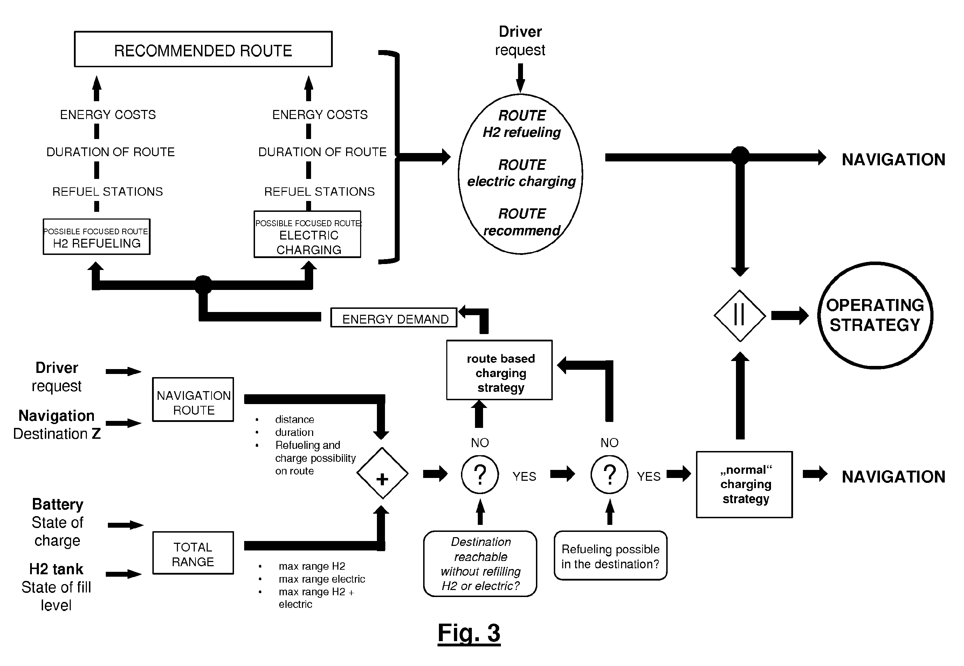

In Fig. 3 ist schließlich ein Ablaufschema eines erfindungsgemäßen Verfahrens zur Ermittlung und Umsetzung einer optimalen Fahrtroute dargestellt.

Abhängig von der zur Verfügung stehenden Energie (Battery State of charge und H2 tank State of fill level) und damit der Reichweite, die das Fahrzeug fahren kann (Max range H2, Max range electric, Total Range), sowie des Fahrziels (Driver request Navigation destination) und daher Streckenlänge, Fahrtdauer (distance, duration) und evtl. der auf der Strecke oder am Zielort verfügbaren Tankmöglichkeiten (Refueling and charge possibility on route) entscheidet das dargestellte erfindungsgemäße Verfahren zunächst auf Basis der Frage ob das Fahrtziel ohne Tankvorgang erreichbar ist über die Notwendigkeit des Einsatzes einer streckenbasierten Ladestrategie (Fig. 3, Bereich links unten). Ist keine streckenbasierte Ladestrategie notwendig, da der vorhandene Treibstoff zum Erreichen des Zieles ausreicht und auch ein ausreichendes Wideraufladen von Strom und/oder Wasserstoff für den nachfolgenden Betrieb am Zielort möglich ist, wird die "normale", nicht streckenbezogene also nicht von den Positionen möglicher Tankstellen abhängige, in das Fahrzeug implementierte Betriebsstrategie (normal charging strategy) zur Umsetzung der Route genutzt (Fig. 3, Bereich rechts unten).

Ist jedoch beispielsweise das Ziel der Navigation für die aktuelle Reichweite des Fahrzeuges zu weit entfernt oder befindet sich keine Lade-/ Nachtankmöglichkeit am Zielort, wird die streckenbasierte Ladestrategie gewählt und daher eine Ermittlung von möglichen Routen in Abhängigkeit von der geographischen Lage sowohl von Tankstellen für den Wasserstoff als auch von Stromtankstellen im Bereich zwischen der aktuellen Position und der Zielposition vorgenommen (Fig. 3, Bereich links oben).

Diese gibt unter Berücksichtigung der berechneten Gesamtfahrtzeit (Duration of Route), der Verfügbarkeit und Positionen der potentiellen Lade-/ Nachtankmöglichkeiten (Refuel Stations) sowie den errechneten Energiekosten (Energy Costs) eine Streckenempfehlung und/oder sowohl eine wasserstoffnachtanken- sowie eine elektrisch nachladen- priorisierende Strecke zur Auswahl an den Fahrer aus (Route recommend, Route H2 refueling, Route electric charging).

Nach getroffener Auswahl (Driver request) durch den Fahrer wird die Strecke an die Navigation (Navigation) übergeben und die dazu berechnete Ladestrategie zur Umsetzung der Route an die Betriebsstrategie (Operating Strategy) weitergegeben (Fig. 3, Bereich rechts).

### Bezugszeichenliste

- F: Fahrtstrecke
- P: Parken
- A: Ausgangsposition, aktuelle Position
- Z: Ziel
- TW: Wasserstoff-Tankstelle
- TS: Strom Tankstelle
- SOC: State of Charge, Ladezustand

## Patentansprüche

1. Verfahren zur Ermittlung und optional zusätzlich zur Umsetzung einer optimalen Fahrtroute für ein Fahrzeug bzw. durch das Fahrzeug, wobei das Fahrzeug einen elektrischen Antrieb mit einem Energiespeicher umfasst und einen Wandler umfasst, wobei der Wandler mittels eines Kraftstoffs betreibbar ist, wobei über den Wandler der Energiespeicher des elektrischen Antriebs aufladbar ist,
**gekennzeichnet durch,**
- Vorgeben einer Zielposition Z **durch** den Benutzer,
- Ermitteln einer oder mehrerer möglicher Routen von der aktuellen Position A zur Zielposition Z, wobei die Ermittlung in Abhängigkeit von der geographischen Lage sowohl von Tankstellen für den Kraftstoff als auch von Stromtankstellen im Bereich zwischen der aktuellen Position A und der Zielposition Z erfolgt,
- Festlegen der optimalen Route **durch** Auswahl aus den ermittelten möglichen Routen,
- Optional Umsetzen der optimalen Route **durch** gezieltes Betreiben des Wandlers zum Aufladen des Energiespeichers beim Abfahren der optimalen Route.

2. Verfahren nach Anspruch 1,
**dadurch gekennzeichnet dass** der Wandler eine Brennstoffzelle ist und der Kraftstoff Wasserstoff ist.

3. Verfahren nach zumindest einem der vorhergehenden Ansprüche,
**dadurch gekennzeichnet, dass** die ermittelten möglichen Routen zumindest eine Route umfassen, die für das bevorzugte Nutzen von Tankstellen für den Kraftstoff optimiert ist und/oder zumindest eine Route umfassen, die für das bevorzugte Nutzen von Stromtankstellen optimiert ist.

4. Verfahren nach zumindest einem der vorhergehenden Ansprüche,
**dadurch gekennzeichnet, dass** die ermittelten möglichen Routen dem Benutzer angezeigt werden, insbesondere zumindest eine Route, die für das bevorzugte Nutzen von Tankstellen für den Kraftstoff optimiert ist und zumindest eine Route, die für das bevorzugte Nutzen von Stromtankstellen optimiert ist, besonders bevorzugt auch eine empfohlene Route.

5. Verfahren nach zumindest einem der vorhergehenden Ansprüche,
**dadurch gekennzeichnet, dass** die Auswahl der optimalen Route aus den ermittelten Routen durch den Benutzer erfolgt.

6. Verfahren nach zumindest einem der vorhergehenden Ansprüche,
**dadurch gekennzeichnet, dass** falls die optimale Route eine Route ist, die für das bevorzugte Nutzen von Tankstellen für den Kraftstoff optimiert ist, das Umsetzen der optimalen Route so erfolgt, dass der Wandler möglichst stark genutzt wird, so dass bei Erreichen einer Tankstelle für den Kraftstoff die Füllmenge an Kraftstoff möglichst gering ist.

7. Verfahren nach zumindest einem der vorhergehenden Ansprüche,
**dadurch gekennzeichnet, dass** falls die optimale Route eine Route ist, die für das bevorzugte Nutzen von Stromtankstellen optimiert ist, das Umsetzen der optimalen Route so erfolgt, dass der elektrische Antrieb möglichst stark genutzt wird, so dass bei Erreichen einer Stromtankstelle der Ladezustand des Energiespeichers möglichst gering ist.

8. Verfahren nach zumindest einem der vorhergehenden Ansprüche,
**dadurch gekennzeichnet, dass** die Ermittlung der möglichen Routen in Abhängigkeit vom aktuellen Ladezustand des Energiespeichers und/oder der aktuellen Füllmenge an Kraftstoff erfolgt.

9. Verfahren nach zumindest einem der vorhergehenden Ansprüche,
**dadurch gekennzeichnet, dass** die Ermittlung der möglichen Routen in Abhängigkeit von Emissionsanforderungen am Zielort erfolgt.

10. Verfahren nach zumindest einem der vorhergehenden Ansprüche,
**dadurch gekennzeichnet, dass** das Umsetzen der optimalen Route so erfolgt, dass nach dem Erreichen des Zielorts der Wandler betrieben wird, um den Energiespeicher aufzuladen.

11. Fahrzeug umfassend einen elektrischen Antrieb mit einem Energiespeicher, einen Wandler und eine Steuereinheit, wobei der Wandler mittels eines Kraftstoffs betreibbar ist, wobei über den Wandler der Energiespeicher des elektrischen Antriebs aufladbar ist, wobei die Steuereinheit dazu eingerichtet ist, ein Verfahren nach zumindest einem der vorhergehenden Ansprüche auszuführen.
